(19) Europäisches Patentamt / European Patent Office / Office européen des brevets

(11) **EP 2 208 039 B1**

(12) **EUROPEAN PATENT SPECIFICATION**

(45) Date of publication and mention
of the grant of the patent:
**02.09.2015 Bulletin 2015/36**

(21) Application number: **08837621.5**

(22) Date of filing: **10.10.2008**

(51) Int Cl.:
*G01M 3/24* (2006.01)      *G01V 1/44* (2006.01)
*E21B 47/10* (2012.01)

(86) International application number:
**PCT/NO2008/000363**

(87) International publication number:
**WO 2009/048340 (16.04.2009 Gazette 2009/16)**

(54) **METHOD AND SYSTEM FOR REGISTERING AND MEASURING LEAKS AND FLOWS**

VERFAHREN UND SYSTEM ZUM REGISTRIEREN UND MESSEN VON LECKS UND STRÖMUNGEN

PROCÉDÉ ET SYSTÈME POUR ENREGISTRER ET MESURER DES FUITES ET DES ÉCOULEMENTS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.10.2007 NO 20075183**

(43) Date of publication of application:
**21.07.2010 Bulletin 2010/29**

(73) Proprietor: **Tecwel AS**
**5162 Laksevag (NO)**

(72) Inventors:
• **LIE, Terje, Lennart**
**N-5264 Garnes (NO)**

• **ANDERSEN, Gunnar**
**N-5174 Mathopen (NO)**
• **INSTANES, Geir**
**N-5222 Nesttun (NO)**

(74) Representative: **Ormberg, Jan Olav**
**Acapo AS**
**P.O. Box 1880 Nordnes**
**5817 Bergen (NO)**

(56) References cited:
**US-A- 3 854 323      US-A- 4 114 721**
**US-A- 4 328 567      US-A- 4 353 122**
**US-A- 4 390 878      US-A- 4 796 026**
**US-A- 5 159 577**

**Description**

**Technical field of the invention**

The present invention relates to methods of registering and measuring leaks and flows. Moreover, the invention concerns measuring systems operable to utilize aforesaid methods. Furthermore, the invention also relates to methods of using passive acoustic transducers in various spatial configurations and connections for detecting and localizing leaks and micro flows of liquids, gasses or particles in, or in connection with, oil- and/or gas-producing wells. Such measuring systems comprise logging tools which are lowered in operation down into wells by means of corresponding wires or coil pipes, the logging tools being utilized alone or as part of a logging string.

**Background of the invention**

Leaks in oil- and/or gas-producing wells potentially cause serious problems for operators, both with regard to safety and economics. Such leaks may in principle occur anywhere where there is a barrier between two volumes when a pressure difference exists in operation between the two volumes. Such leaks may for example arise:

  (a) in a borehole casing during drilling;
  (b) in a production pipe during oil and/or gas production;
  (c) in a production pipe during its installation; and
  (d) during testing of other mechanisms, for example testing gas lift valves.

When a leak arises, there are many important reasons for correcting the leak. The reasons include:

  (i) avoiding total loss of control of a well in which the leak has arisen;
  (ii) preventing corrosive fluids from harming a borehole casing in which the leak has arisen; and
  (iii) delaying a complete workover of the well as a consequence of the leak.

By correcting such leaks, operators may potentially save considerable costs.
A published British patent application no. GB 2 367 362A discloses a system including two broadband receivers located in mutually different spatial positions. Sensors included in the receivers are optionally accelerometers or hydrophones. When the two receivers are positioned in operation relative to a leak, electrical signals generated by the receivers in response to receiving a general acoustic noise energy from the leak are analyzed for characterizing the leak.
Such analysis involves dividing the electrical signals into frequency bands. Moreover, such analysis is based upon temporal periods for the acoustic noise energy to propagate from the leak to the two broadband receivers. The system is employed principally in water pipes, but is susceptible to being optionally utilized in other fluid-conducting pipelines, for example where these pipelines are buried below ground level. Moreover, the system depends upon generation of acoustic noise energy at a relatively low frequency, in order for the noise energy to be able to propagate over relatively larger distances, for example in a range of 50 to 100 meters, from the leak to the two receivers. In order to process the two electrical signals from the receivers, a cross correlation computation is employed to determine a difference in arrival time for the two signals, and thus to determine from the arrival time a spatial localization of the leak.
In order to determine a magnitude of the leak, four alternative methods are described in the aforementioned British patent application. In the system, the two broadband receivers are operable to detect the acoustic noise energy from the leak, wherein the noise energy is divided across several frequency bands after detection. By cross-correlating the received signals, a correlated signal is computed having an amplitude proportional to an effect of the signals, wherein the effect is related to a magnitude of the leak. Different statistical methods are optionally employed, such methods taking into account a size of a pipeline, and a type of material employed to construct the pipeline. In a first such method, a magnitude of the leak is computed from a pressure different present across the leak. In a second such method, amplitude characteristics are computed, wherein a square root of a cross correlation function is employed in such computation. In a third such method, use is made of so-called classification parameters, for example a Naïve Bayes, "Decision Tree", or vector/nucleus based classification parameters. In a fourth such method, a relationship between individual components or groups of components in the effect or amplitude characteristics is identified. Alternatively, the system optionally uses neural networks with noise levels, pipeline type, pressure differences and similar being used as initial values, with the magnitude of the leak, divided into several magnitude levels, as output values:
Moreover, in a published international PCT patent application no. WO 98/50771, there is disclosed a method of digitalizing registered data prior to sending the data for processing in a data processor unit. The method utilizes two mounted sensors, for example accelerometers, hydrophones or microphones. Optionally, the sensors are used on each side of, and at a relatively large distance from, a leak. A time required for acoustic energy to propagate from the leak to the sensors is found in order to localize the leak, and cross-correlation is used to determine the magnitude of the leak. The measurements registered by the sensors are sent in analogue form by cable to a remote signal processing unit. In the signal processing unit, the measurements are digitalized and transferred to a microcontroller which is operable to compress packages of data for wireless transferral to a receiving station, which may be placed very remotely from the signal processing unit. In addition, there are described methods of signal processing and associated calculating algorithms operable to determine results for presentation.

In a published United States patent application no. US 2002124633, there is disclosed a method of, by filtration, finding the connection of patterns for real-time acoustic noise, in order to detect and localize leaks in a pipeline. The method includes steps of finding a pressure wave, and differentiating noise generated by a leak associated with the pressure wave from background noise. The method involves a step of finding the background noise beforehand in a normal non-leak situation, wherein the noise generated from the leak is differentiated from the background noise. Mounted sensors are used to receive the real-time acoustic noise generated within a pipeline, and the data processors are situated at several positions along the pipeline for processing signals generated by the mounted sensors, and data from these data processors are used collectively in a central node in order to spatially locate the leak.

In a published Canadian patent application number CA 1141019, there is disclosed a method of localizing a leak by using two passive acoustic transducers placed on each side of the leak in order to, through correlation of received noise, find a spatial location of the leak. Optionally, more than two transducers are used in order to implement the method. The transducers are optionally placed spatially randomly in relation to the leak, for example on both sides of the leak or on one side of the leak. In addition, the transducers optionally have different transducing characteristics. Techniques as described in the foregoing for determining a spatial location of the leak are mainly utilized.

In a published patent no. JP4081633, there is described a method of detecting the presence of a leak but not necessarily the localization thereof. The method employs an acoustic transducer where a noise profile is measured and then compared with an earlier measured noise profile characteristic for normal conditions; the earlier measured noise profile characteristic corresponds to natural background noise. The method includes a step of subtracting the measured signal from the background noise.

In a published international PCT patent application no. WO2004104570, there is described a system for detecting leaks in underground gas pipelines by the aid of two acoustic transducers. A first of the traducers is placed in a fixed position above, or at a certain distance from, a gas pipeline. A second of the transducers is placed successively in a plurality of positions above the pipeline. Output signals generated by the transducers are measured for all the positions to the second transducer, and the signals are filtered to remove background noise. If there is a maximum value for a difference between the measured noise and the background noise, such a maximum value determines the presence and position of a leak. Another example of leak detection a borehole of a well is given by the document U4114721.

A technical problem encountered in respect of the aforementioned known methods is that they are at least one of:

(a) too time consuming;
(b) require large amounts of computational effort;
(c) are not able to adequately distinguish when more than one type of leak is substantially spatially coincident with another type of leak, for example in a vicinity of a complex fracture of a casing;
(d) insufficiently precise when spatially detecting leaks, and/or insufficiently sensitive to identify virtually every leak in a well.

The present invention seeks to address one or more of these problems encountered when utilizing known contemporary methods of leak detection, for example as elucidated in the foregoing.

## Summary of the invention

An object of the present invention is to increase the precision of detection, and to localize virtually every leak in wells, pipelines and similar. In accordance with a first aspect of the invention, there is provided a method as defined in claim 1

There invention is of advantage in that dynamic filtering by dividing of the receiving signals into several frequency ranges makes it possible to better optimise the signal-to-noise ratio for isolating signal components representative of leaks or flows from the background noise.

Optionally, the method includes a step of computing a physical size of the one or more leaks from a pressure difference ($\Delta P$) existing in operation across a wall of a pipe in which the one or more leaks have arisen and an amplitude of the one or more signals provided by the acoustic transducer. Being able to determining a leak size from a pressure difference ($\Delta P$) in combination with amplitude detection of an acoustic signal derived from the leak without primarily considering spatial positioning of the at least one acoustic transducer relative to the leak is an unexpected result.

Optionally, the method involves transmitting the filtered data at a data rate of up to 1 kbit/second from the processing unit along a wire connection of a string to the computer in the surface region remote from the acoustic transducer. In comparison to other known system for characterizing defects employing high bandwidth digital communication links, the present invention is capable of implemented and worked with more modest bandwidth requirements, thereby potentially reducing equipment cost and enhancing equipment reliability. More optionally, when implementing the method, the wire connection is in a range of 3 to 10 km long.

Preferred embodiments of the invention implemented as a method are defined in the dependent claims 2 to 14.

Optionally, when implementing the method, the acoustic transducer is mounted inside a sensor housing adapted to be continuously lowered or raised in operation down or up into the well or a pipe by utilizing a string to support the at least one acoustic transducer. Continuous lowering or raising the acoustic transducer is important in the content of the present invention and surprisingly generates quite different technical measurement results in comparison to a stationary or stop/start manner of measurement performed by the acoustic transducer.

Optionally, when implementing the method, data collection occurs concurrently with the acoustic being in continuous motion up or down the well or pipe with a logging speed in a range of 0.1 to 50 meters per minute.

Optionally, the method is adapted to characterize the well implemented as an injection well for gas and water.

Optionally, the method is adapted to detect and localize a secondary leak, the secondary leak being a leak and flow of gas, liquid, or particles, in a position further out from the well, namely in a distantly-positioned casing room.

Optionally, the method is adapted to measure small flows of oil, water, or gas, or a combination of these in a casing room close to a position of the acoustic transducers.

Optionally, the method is adapted to implement fluid measurements while the well or the pipe is operational or during shutdown.

Optionally, the method involves using a logging string or a tool for the transducer that is continuously in motion when in operation in the well, or a pipe with log speeds in a range of 0.1 to 50 metres per minute, for carrying out measurements whilst the well or pipe is operational or during shutdown.

The present invention as defined in the appended patent claims is capable of, with great accuracy, detecting and localizing virtually any leak in a well. An unwanted radial or axial flow of oil, water, particles or gas, or a mixture of these across a barrier, may thus be detected, localized, and thereafter corrected. The high sensitivity of the system and method makes it possible to detect leak volumes down to a few decilitres per minute, for example less than 100 decilitres per minute and more preferably less than 10 decilitres per minute, whilst simultaneously localizing a leak to within a few centimetres precision. The system works independently from the direction of the flows, and it provides a particularly advantageous feature that one may detect leaks in or nearby a casing, even if it is measured from a position inside an associated production pipe. Thus, the system is capable of detecting both particles and flowing liquids or gases in and by a flow point of a leak. A tool that is described in relation to the present invention may be driven down into the well during normal operation, both when produced and injected fluids are present.

In addition to detecting leaks in a cross section of the pipe construction, the present invention may also be used to detect leaks with very small fluid flows lengthwise along the well, for example within a casing.

The following description of the present invention comprises a method and a system for detecting leaks or flows of liquid, gasses, or particles by means of acoustic transducers. The invention is suited for measuring leaks or flows of fluid, gasses, or particles in connection with, for example a petroleum producing well in one or another phase of the process by complementing the well, or by production of oil or gas, or by use of the well for injecting gas or fluid into a reservoir. The tool is shaped as a closed pipe, a so called down hole "log tool", which may be inserted into the well, for example by way of being supported on a wire or a coil pipe. Thus, the tool is localized in operation inside the pipe itself that is being used for production or injection of fluids during the measurements. The tool logs data continuously by utilizing one or more passive acoustic transducers that detect, that is "listens to", the noise profile from the surroundings whereat the one or more transducers are localised at any point in time. This is done at the same time as the tool is guided through the pipe, in order to facilitate detection of a leak or flow when the tool is near the specific leak or flow, irrespective of the nature of the leak or flow. There will always be several different kinds of noise present, such as electrical, mechanic, or thermal noise, or noise from flowing mediums and possibly from the presence of particles like sand and other mechanical objects, which may be brought in contact with the structure. This noise, which exists in the normal conditions where there are no leaks present, is here called "background noise". It will have its own special spectral characteristics, which may be detected, analysed, and saved prior to implementing the measuring process itself. A leak or flow of fluid or gasses or particles in the structure will, however, generate noise with a different characteristic than the background noise, as this noise will be localised in one or more specific frequency ranges, different from the frequency distribution of the background noise. Thus, the tool is specially designed to collect and process this information. The acoustic signals are locally and immediately digitised and processed inside of the tool itself, and then transferred to a suitable computer on the surface that stores and visually presents the results of the logging. The tool may thus give the operator information about even small leaks, as well the specific position of the leak in real time.

Features of the invention are susceptible to being combined in any combination without departing from the scope of the invention as defined by the accompanying claims.

## Description of the Figures

Embodiments of the present invention will now be described, by way of example only, with reference to following diagrams wherein:

Figure 1 is a schematic illustration of a cross-section of a typical oil well and its associated components, wherein a logging tool is located inside the well, the logging tool being operatively suspended by a wire; in Figure 1, a plurality of spatial points whereat leaks arise in processes of drilling, completing and production are shown;

Figure 2 is a schematic illustration of a cross-section of the tool in Figure 1 localized in a well; there is shown a sensor element implemented as a passive acoustic transducer that is connected to an amplifier whose parameters are set by a digital signal processor (DSP). Communication from this processor up to the surface is provided in operation via by a telemetric system and a cable built into the wire wherefrom the tool hangs in operation;

Figure 3 is a schematic illustration of sub-signals and their respective Fourier components in respect of the present invention, the Fourier components of a given sub-signal being isolated with respect of Fourier frequency $\omega$; and

Figure 4 is a schematic illustration of sub-signals and their respective Fourier components in respect of the present invention, the Fourier components of a given sub-signal being overlapping with respect of Fourier frequency $\omega$.

## Description of embodiments of the invention

In summary, the present invention relates to a method of registering and measuring leaks and flows in a pipe by monitoring passive acoustic conditions in the pipe, for example in connection with oil and gas wells. The method utilizes one or more acoustic sensor elements to sense acoustic signals generated from several different acoustic sources arising within pipes and around pipes. The method differentiates the signals from each source through analysis. The invention also relates to a tool that comprises one or more acoustic sensor elements and a digital processing unit which operates within a pipe, and which may be moved continuously or stepwise in the longitudinal direction of the pipe.

Processes that partake as acoustic signal sources in a pipe may be:

(a) flow of fluids through the pipe;
(b) flow through leaks;
(c) annular flow in porous media in an external region outside the pipe;
(d) particles that hit the pipe wall or tool; and
(e) mechanical occurrences such as impacts and gliding between the tool and the pipe wall.

The received acoustic signals are transformed to one or more digital signals, and digital signal processing is carried out within the tool. A selection of the processed information is then sent onto a surface on the outside of the pipe for one or more of the following: storing the information, interpreting the information, and viewing the information.

A selection of data that is being sent from the tool, for example to the aforesaid digital processing unit, namely a computer, may be configured beforehand or during execution of measurements so that all the necessary information is available for interpretation in spite of limitations, such as the data transmission rate capacity of a communication line that is utilized between the tool and the computer.

Following this, the invention with be described in more detail regarding its manner of operation, its construction, with reference to details in the Figures mentioned above.

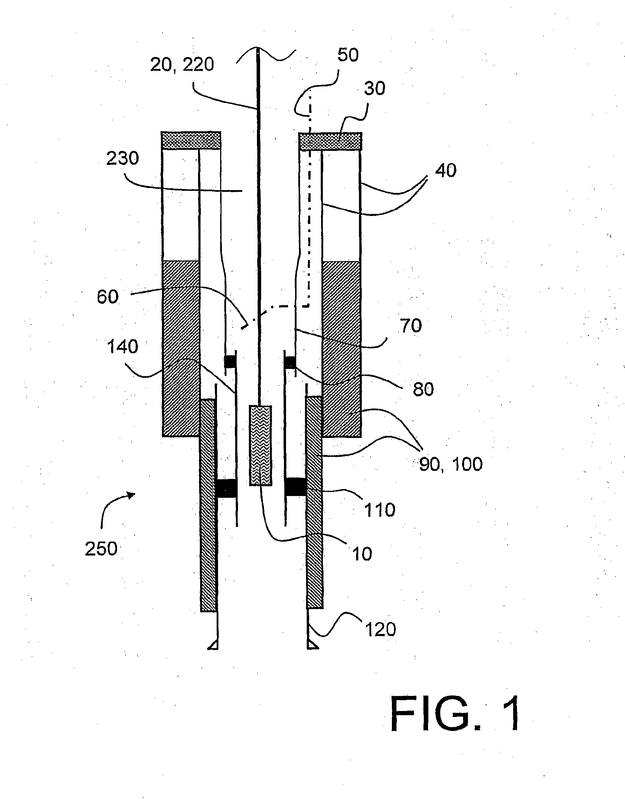

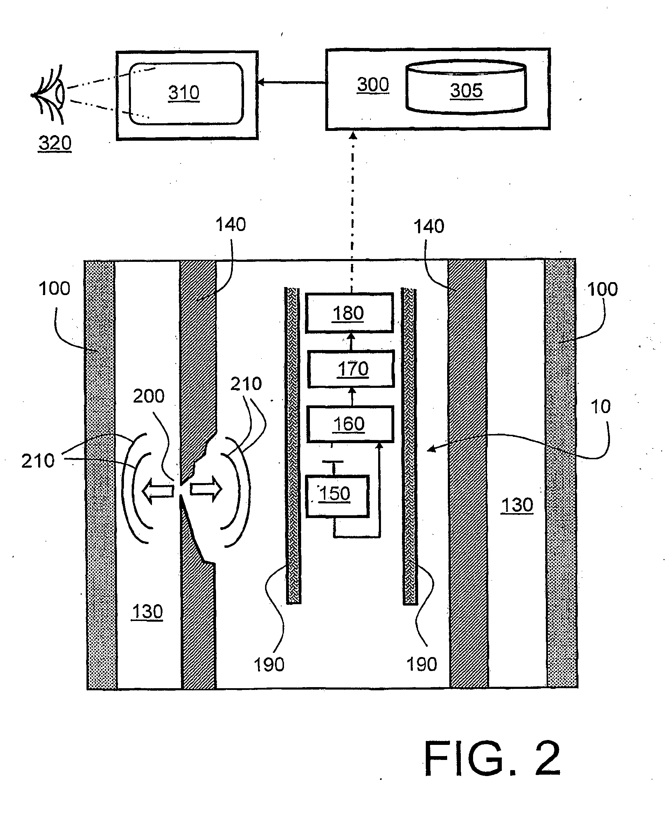

Referring to Figure 2, a sensor element **150** is implemented as an acoustic transducer including a piezoelectric crystal that is adapted to be placed inside a metal pipe **190**; the sensor element **150** and the metal pipe **190** constitute component parts of a logging tool **10**. The acoustic transducer is operated in a passive mode, wherein the transducer does not itself emit acoustic signals, but instead detects received acoustic signals **210** arising in operation due to different aforementioned processes occurring within a well **230** down into which the logging tool **10** is lowered during use as illustrated in Figure 1. All other necessary electronic circuits **160, 170, 180** for processing electronic signals representative of the acoustic signals **210** are also included inside the logging tool **10** itself, so that the sensor element **150** is linked directly to these electronic circuits **160, 170, 180**. This logging tool **10** forms a part of a logging string **220,** which is lowered down into the well **230** in operation, for example by aid of a wire **20** of the logging string **220.** When a leak **200** is active, acoustic noise will be generated in the form of acoustic waves as a result of the flow of fluids through the leak **200**; the waves give rise to the aforesaid acoustic signals **210**. These fluids may be made up of liquid or gas, or a mixture thereof; moreover, these fluids may also include particles. The acoustic signals **210** include signal energy which is potentially localized in one of more frequency ranges; noise energy having a frequency spectrum in a relatively low frequency range may propagate far greater distances, for example typically in a range of 30 to70 meters, whereas noise energy having a relatively high frequency spectrum propagates only over very short distances, for example over a propagation distance of less than 1 meter. One or more frequency components of the noise energy will be dependent on the size of the leak **200** and a pressure drop over a barrier through which the leak **200** as arisen and through which flows of liquids, gases, or particles occurs.

During use, the logging string **220** is lead through the well **230** while the sensor element **150** is employed to carry out measurements in a continuous manner, and the leak **200** is thus detected when the logging tool **10** is in close spatial proximity to the leak **200.** Such a dynamic positioning of logging string **220,** and thereby a physical closeness of the string **220** to the leak **200,** enables the tool **10** to be able to both detect very small leaks, as well as to localize these small leaks very precisely. The acoustic noise propagates through a wall of metal pipe **190,** and is then subsequently detected by the sensor element **150.** On account of the tool **10** employing a so-called passive sensor which does not itself emit interrogating radiation, one may compare a detector mechanism provided by the tool **10** with listening to acoustic waves corresponding to acoustic signals **210,** which propagate from a surroundings of the tool **10.** By executing experiments for measuring different kinds of background noise, flow noise both with and without liquid, gas and/or particles, and leak noise, it is found that leaks of interest mainly generate acoustic noise at relatively high frequencies, for example in a range of 10 kHz to 1000 kHz, and more preferably in a range of 20 kHz to 1000 kHz, namely in an ultrasonic frequency range. Such high frequency acoustic signals have a relatively short propagation reach, for example in a range of centimetres (cm), that may not be detected by contemporary systems that place their acoustic transducers at a distance of several tens or hundreds of meters away from a possible leak. Thus, the present invention is especially suited for detecting such small leaks on account of the tool **10** being moved in operation in close spatial proximity to the possible leak **200.** If no leaks are present, the noise profile experienced when the tool **10** is drawn through the well **230** will be stable, namely dominated by a general noise from a general surroundings of the well **230.** Conversely, when an active leak is present, the noise profile will have an increased noise level in specific frequency ranges. This increased noise level in the aforementioned specific frequency ranges may then be observed, for example, on plots presented on a screen or display **310** electrically coupled via a computer **300** to the tool **10;** for example, noise levels in the specific frequency ranges may be viewed and interpreted by an operator **320,** or interpreted automatically by means of the computer **300** operable to execute suitable signal processing software **305.** The signal processing software **305** is beneficially provided on a data carrier which is machine-readable by the computer **300.**

The background noise, such as noise from the surroundings and mechanical contact noise that is always present during motion of the tool **10,** is in the present invention eliminated by utilizing filtering software installed in a digital signal processor (DSP) **170.** Through a telemetry unit **180,** a two-way communication between the logging tool **10** and surface logging equipment comprising the computer **300** is established, the operator **320** being located at the corresponding logging equipment. Communication between logging tool **10** and the computer **300** at a surface region occurs via a cable built into the wire **20.**

Thus, the software utilized in the DSP **170** is optionally dynamically changed, deleted or overwritten by new software, or new parameters may be input during operation, for example regarding dynamic signal filtering in several frequency ranges, if this should be necessary or desirable for the operator **320.** Such dynamic signal filtering may, for example, either be determined manually by the operator **320,** or automatically according to signal components present within the signal.

More specifically, a number of frequency bands are chosen and adjusted within which the strength of the received signal is measured, and the result is sent from the tool **10** to the computer **300.** The number of frequency bands may be determined prior, during and/or automatically/dynamically. The number of frequency bands and their frequencies is optionally dependent on which signal sources one is desirous to separate at a given instance. Such requirements again depend on what the operator **320** wishes to detect, as well as the acoustic conditions within the pipe **140.**

The software for performing signal interpretation in the computer **300** combines the flow of amplitude information for the chosen frequency bands with the position of the tool **10** along the pipe **140,** in order to determine the magnitude and position of signal sources of interest disposed along the pipe **140.** Such signal sources include, for example, leaks, annular flows on the outside of the pipe **140,** or the presence of particles in fluid motion within the pipe **140,** or in a region outside the pipe **140.**

Every source of acoustic energy, numbered with an index *i*, of a total of N sources, contributes to the received acoustic effect in each of M frequency bands with index j. The distribution on different frequencies depends on the nature and magnitude of a source to be considered.

The presence and magnitude of different sources may be identified from the received acoustic signal by means of calculations such as, for example, seen by simultaneous equations or artificial networks. Such identification will be elucidated in greater later for example. The received acoustic effect within frequency band j is equal to the sum of the contributions from the N signal sources given in Equation 1 (Eq. 1):

$$P_j = f_{j,1}s_1 + f_{j,2}s_2 + ... + f_{j,i}s_i + ... + f_{j,N}s_N \qquad\qquad \text{Eq. 1}$$

Thus, for M frequency bands, a linear equation set may be given as in Equation 2 (Eq. 2):

$$P = F.s \qquad\qquad \text{Eq. 2}$$

and in detail as given in Equation 3 (Eq. 3):

$$P = \begin{bmatrix} P_1 \\ P_2 \\ ... \\ P_M \end{bmatrix}, s = \begin{bmatrix} s_1 \\ s_2 \\ ... \\ s_N \end{bmatrix}, F = \begin{bmatrix} f_{1,1} & ... & f_{1,N} \\ ... & ... & ... \\ f_{M,1} & ... & f_{M,N} \end{bmatrix} \qquad\qquad \text{Eq. 3}$$

wherein the coefficients $f_{ji}$ may be expressed as in Equation 4 (Eq. 4):

$$f_{j,i} = \frac{C_{j,i}(s_i)}{g_j} \qquad\qquad \text{Eq. 4}$$

$S_j$ is a number that designates the magnitude of the sound source as measured from the position of the tool **10.** In addition $g_i$ is an amplification factor that reflects the dependency on frequency in the sensitivity of the tool **10,** while the factor $C_{ji}$ denotes the effect spectrum of the sound source. Generally, the factor $C_{j,i}$ is a function of the dependent factor $s_j$, but for some types of sources the effect spectrum may be approximated as independent from the magnitude of the source, so that the factor $C_{j,i}$ and thus the factor $f_{j,i}$ become constant coefficients.

When the coefficients $g_{j,i}$ are known during the signal processing the equation set may be solved for the indicator $s_j$ of the source magnitude. A solution is chosen and the values for $s_j$ measured by the tool in various positions is interpreted in order to localize and calculate the magnitude of the signal sources.

The tool **10** is fully digitalized through use of the DSP **170,** and thus use of many analogue components such as filters, amplifiers, and other analogue circuits is avoided. The DSP 170 is also equipped with a large so-called flash memory where one loads a portion of the adapted, modular software **305.** An important feature of logging tool **10** is that it operates simultaneously in several different frequency bands in the given frequency range. Advantageously, the different frequency bands may be changed dynamically during use of the tool **10.** This occurs by initially having a broadband passive acoustic transducer, namely the sensor element **150,** which is connected to electronic units of the tool **10,** for example the amplifier **160.** An output signal from amplifier **160** is then connected with one or more frequency filters that each has a bandwidth that is smaller or equal to that of the transducers, namely the total bandwidth of sensor element **150.** High and low pass frequencies for these filters are set digitally from DSP **170,** and thus both the bandwidths and center frequencies for these filters may be set by changing the software in the DSP **170.** By such an approach, several different types of signal processing are susceptible to being implemented according to need. Such software may comprise signal-processing routines that are suited for suppressing undesired background noise. The background noise may arise from contact between metal and metal, mechanical/structural noise, or electric interference, and is typically difficult to remove. This is also a known problem for other prior acoustic logging tools which are contemporarily commercially available. Use of the DSP **170,** for example dynamic changing of the frequency band to signal filtering, enables an optimal signal to noise ratio (namely S/N-ratio) to be attained, something that also is susceptible to contributing to suppression or totally remove the background noise. In a preferred embodiment of the present invention, a single broadband acoustic transducer is utilized for implementing the sensor element **150.** Alternatively, use of several transducers simultaneously is also possible pursuant to the present invention, wherein these several transducers have their best sensitivity in mutually different frequency ranges; by use of several transducers, it is feasible to expand the total sensitivity and/or frequency range for the tool **10.**

In other prior measuring systems, the above-mentioned parameters, such as the bandwidth to the different filters, are determined by choice of specific electronic components comprising associated static-configuration electronic circuits. When the parameters are chosen in such prior measuring systems, it is not possible to change the filtering characteristics without physically rebuilding a given electronic filter circuit. When the characteristics are susceptible to being digitally dynamically changed, such as in the present invention, for example by changing the software of the DSP **170** and/or the computer **300,** this leads to, among other things, that changes may be carried out on the tool **10** when it is currently working down in a well, by sending down new software from the surface to the tool **10** within the well. Thus, signal filtering executed within the tool **10** may be dynamically optimized, thereby rendering it possible to improve the aforementioned S/N ratio, and thereby improving a reliability of the detection of the leak **200.**

A clear advantage by being able to change the filter characteristics through changing the above mentioned frequency ranges for signal filtering, is that the different parts of the frequency spectrum of the acoustic signals **210** may be investigated simultaneously. Signal processing in the DSP **170** may be programmed via signal conduction after installation of the tool **10** in the well **230.** Thus, the filters in the DSP **170** may be adjusted so that sensor **150** becomes most sensitive in a range where the noise from a single leak **200,** operation or flow of gas, fluid, or particles occur at the same time as a different type of noise in the same frequency range is suppressed. This gives an optimal signal-to-noise ratio (S/N-ratio), resulting in a more accurate measurement. Thus, it is possible for the present invention to at least partially solve the previously mentioned technical problem.

Acoustic transducers also include their own inherent internal noise sources, which will arise when they become activated by being powering up, namely energized; such noise includes wide-band thermal noise and shot-noise. The self-generated noise arising in operation in the sensor element **150** is characteristic for each sensor and will show a known pattern after being measured during isolated conditions during production and commissioning of the tool **10.** This self-generated noise is independent from the noise due to fluids flowing past the tool **10.** When this self-generated noise is characterized, it will simply be able to be eliminated in a later measuring activity, for example by use of suitable signal filtering.

A prominent feature of tool **10** is that it is especially well suited for detecting the high frequency noise of interest that, as a rule, is due to small leaks or flowing of liquid, or gasses, or particles, while the tool **10,** or the tool **10** as part of a tool string, is in motion; such motion may either be in "stop/start" steps or continuous as needed for characterizing a well. During other uses, for example when seeking to identify leaks in water pipelines underground, small leaks are not so critical since fluid losses therethrough are little compared to the cost of digging up the pipe and repairing the damage. In oil and gas operation, however, leaks may be critical since aggressive or environmental hostile fluids can escape, and because the high pressures in oil and gas wells may increase the damage over a short time period, for example by way of erosion occurring in perimeter of a leak. As earlier elucidated, the high frequency noise of interest may only propagate over short distances, often shorter than a spatial distance in an order of 1 metre. Such noise signals thus will not be detectable by known technology, where mounted sensor elements are used, since the sensor elements in such instances are mainly placed with a minimum of a couple of tens of metres distance. On account of tools pursuant to the present invention being physically in motion continuously through a region or interest results in leaks being detected down to a spatial precision of, for example, less than 1 cm.

On account of being able to bring the tool **10** is close proximity to a possible leak makes, it becomes possible for the tool **10** and its associated logging apparatus, represented by the computer **300** and its display **310,** to detect leaks that generate very weak acoustic noise-like signals. The present invention may, as a consequence of this, detect leaks down to a size range a flow of 1 dl/min of liquids and 0.0001 standard cubic metres of gas per minute. For example, leaks having a flow in a range of 1 to 100 dl/min are susceptible to being detected. Moreover, leaks having a gas flow in a range of 0.0001 to 0.1 standard cubic metres of gas per minute are susceptible to being detected. Since a combined leak flow of liquid and gas may generate noise with an intensity that is higher than the fluids' individually generated noise, the present invention works irrespective of the composition of the leak flow, for example through the hole **200.**

In operation, it has been unexpectedly found by the inventors that leaks are more effectively found when the tool **10** is moved continuously down a borehole. If the tool 10 is maintained in a stationary position or moved in a step-wise manner, it is much more difficult, and in some cases impossible, to detect a leak in the pipe **140.** If the tool 10 is moved in a step-wise manner, an acoustic signal received by the tool **10** is found to be drastically reduced, for example by 70% or more. Moreover, when the tool **10** is moved continuously past the leak **200,** a signal amplitude received by the sensor element **150** reaches a distinct maximum peak as a function of spatial position rather than a gradual Gaussian-type peak. A reason for such a characteristic is not known and is completely unexpected. A size of the leak 200 is susceptible to being computed using a simple formula from knowing a pressure difference ΔP between an inside and outside of the pipe **140** together with a measure of acoustic signal amplitude received at the sensor element **150.**

Since the tool **10** is susceptible to being moved freely within the well **230,** for example the tool **10** may be moved up and down repeatedly close to a leak point, the tool **10** will detect leaks independently of which direction resulting fluid flows within and around the well **230.**

The high sensitivity of the tool **10** pursuant to the present invention enables the tool **10** to detect leaks situated outside an immediate presence of the tool **10,** so called secondary leaks. With reference to Figure 1, one can sense several volumes outside a production pipe **140,** in which the tool **10** is situated when in operation. Thus one may, for example, detect leaks over production packing **110** or through a cemented casing pipe **90, 100.**

According to another embodiment of the present invention, the acoustic transducer **150** of the logging tool **10** has installed therein a plurality of sensor elements constituting the acoustic transducer **150.** Such a configuration for the acoustic transducer **150** provides benefits of enabling various types of leaks to be found more efficiently and accurately. In some cases, a leak as mentioned previously may arise in the casing pipe **190.** Thus, a leak may potentially arise from a reservoir **250** and into a casing room between the casing pipe **100** and the production pipe **140.** This leak leads to a so-called microflow of fluids in the casing room. Such a flow is not desirable since petroleum fluids escape and a change in the pressure balance in well **230** can arise. Such changes may lead to the occurrence of other leaks as a result of this pressure unbalance. Microflows tend to generate mainly lower frequency acoustic signal components. In such a situation, one may make use of more than merely one acoustic transducer, namely sensor element **150,** where these transducers have a narrower bandwidth, and are constructed in order to give maximal sensitivity at lower frequencies.

In one example embodiment of the present invention, the tool **10** and its computer **300** are configured to analyze a signal generated by the sensor element **150** over a relative small number of frequency bands and for a relatively limited number of potential different types of noise sources present near the tool **10.** Optionally, one or more of the frequency bends are overlapping as will be elucidated in more detail later. In operation, several samples of the signal are obtained as the tool **10** is moved up or down the well **230.**

A mathematical basis and operation of the software **305** executable on the computer **300,** together with signal process software loaded into the DSP **170** will now be described. In such a simplified arrangement for computing associated with the tool **10,** the aforesaid Equations 1 to 4 (Eqs. 1 to 4) are susceptible to being expressed in an alternative form as will now be elucidated.

The signal from the sensor **element 150** can be represented by a signal $R_T$. The signal $R_T$ includes numerous Fourier components at various Fourier frequencies $\omega$. By way of example, it is feasible that the tool **10** is brought in a vicinity of a region along the well **230** where there are simultaneously three faults giving rise to four sub-signals as expressed in Equation 5 (Eq. 5).

$$R_T = R_1 + R_2 + R_3 + R_{en} \qquad\qquad \text{Eq. 5}$$

wherein

$R_1 = $ a sub-signal due to a leakage of liquid through a leakage hole;
$R_2 = $ a sub-signal due to a leakage of gas through a porous leakage region; and
$R_3 = $ a sub-signal due to a sand flow through a crack; and
$R_{en} = $ a sub-signal corresponding to background noise-generating processes occurring along the well **230** and electronic noise arising in electronic circuits of the tool **10.**

Although Equation 5 (Eq. 5) is sufficiently accurate in many circumstances, when the signals $R$ are uncorrelated noise-like signals, summing of quadratic terms is more appropriate to ensure accuracy as defined by Equation 6 (Eq. 6):

$$R_T^2 = R_1^2 + R_2^2 + R_3^2 + R_{en}^2 \qquad\qquad \text{Eq. 6}$$

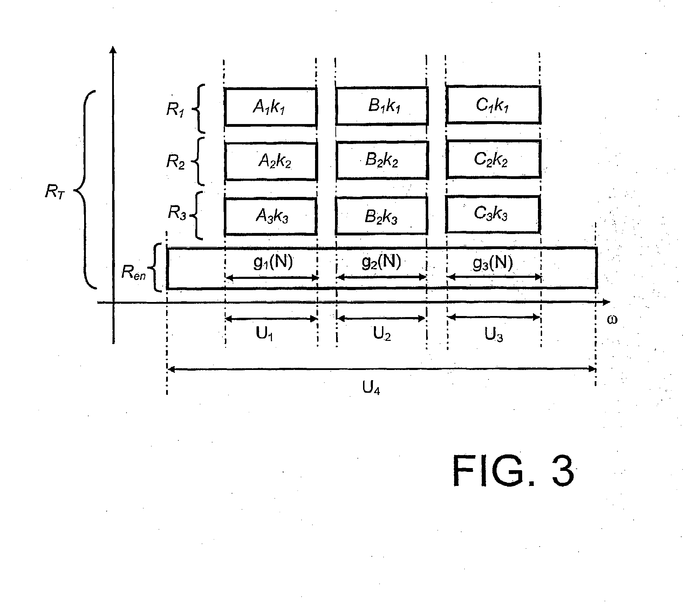

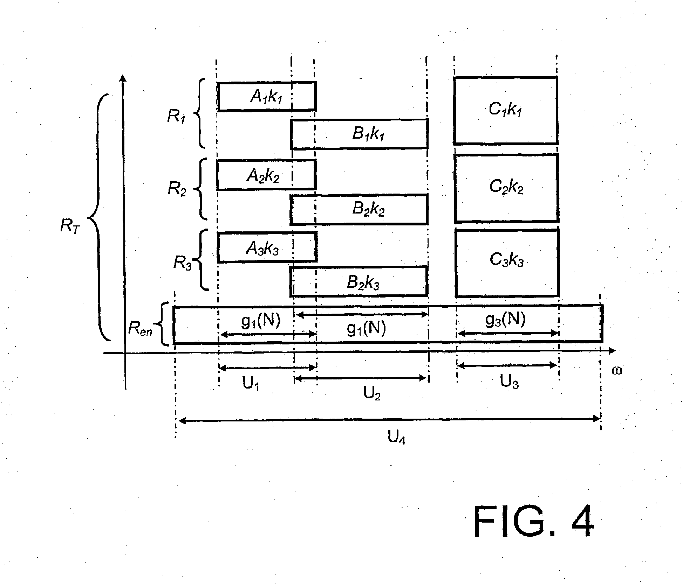

The sub-signals $R_1$, $R_2$, $R_3$ and $R_{en}$ have mutually different Fourier components providing these sub-signals with signatures defined in terms of frequencies of their Fourier components and their relative amplitude within each of the sub-signals. In the signal $R_T$, the sub-signals are all present if all three types of fault occur simultaneously in the well **230.** Conversely, if no faults are present in the well **230,** the signal $R_T$ will simple correspond to the sub-signal $R_{en}$. The sub-signal $R_{en}$ will depend, for example, whether or not laminar or turbulent fluid streaming is occurring generally within the well **230** whilst the tool **10** is being moved within the well **230.** In Figure 3, there is shown an abscissa axis corresponding to Fourier frequency $\omega$, and an ordinate axis representing the sub-signals wherein the sub-signals $R_1$ to $R_3$ are mutually isolated in respect the Fourier frequency $\omega$. Conversely, in Figure 4, there is shown an abscissa axis corresponding to the Fourier frequency $\omega$ and an ordinate axis corresponding to the sub-signals $R_1$ to $R_3$ wherein overlap of the sub-signals $R_2$ and $R_3$, and also overlap of the sub-signals $R_1$ and $R_2$, occurs in the Fourier frequency domain $\omega$. The sub-signals $R_1$ to $R_3$ arise on account of physical processes occurring in respect of a particular type of one or more leaks that the sub-signals $R_1$ to $R_3$ describe.

Each of the sub-signals $R_1$ to $R_3$ themselves comprise, for example, sub-signal components as described substantially by Equations 6 to 9 (Eqs. 6 to 9):

$$R_1 = g_1(A_1 k_1) + g_2(B_1 k_1) + g_3(C_1 k_1) \qquad \text{Eq. 6}$$

$$R_2 = g_1(A_2 k_2) + g_2(B_2 k_2) + g_3(C_2 k_2) \qquad \text{Eq. 7}$$

$$R_3 = g_1(A_3 k_3) + g_2(B_3 k_3) + g_3(C_3 k_3) \qquad \text{Eq. 8}$$

wherein

$g_1, g_2, g_3$   are functions each generating one or more Fourier frequency component whose amplitude is determined by associated arguments of the functions; for example function $g_1$ generates a Fourier component at a frequency characteristic of the function $g_1$ in proportion to its arguments $A_1 k_1$;

$k_1, k_2, k_3$   are respective magnitudes of first, second and third defects or leaks present in the well **230** respectively; and

A, B, C   are shaping coefficients which define a characteristic spectral signature for each type of leak or defect.

In the tool **10**, the DSP 170 is operable to divide the signal $R_T$ generated by the sensor element **150** by selective band-pass frequency filtering into three band-pass signals $U_1$ to $U_3$ providing a representation of signal energy within their respective band-pass bandwidths as provided by Equations 9, 10, and 11 (Eqs. 9 to 11):

$$U_1 = g_1(A_1 k_1) + g_1(A_2 k_2) + g_1(A_3 k_3) + g_1(N) \qquad \text{Eq. 9}$$

$$U_2 = g_2(B_1 k_1) + g_2(B_2 k_2) + g_2(B_3 k_3) + g_2(N) \qquad \text{Eq. 10}$$

$$U_3 = g_3(C_1 k_1) + g_3(C_2 k_2) + g_3(C_3 k_3) + g_3(N) \qquad \text{Eq. 11}$$

wherein $g_1(N)$, $g_2(N)$ and $g_3(N)$ are background noise components as illustrated in Figures 3 and 4. A pass-band signal $U_4$ would include an entirety of the background noise of the tool **10**.

To a first approximation, the energy within each band associated with the signals $U_1$ to $U_3$ are a summation of each of the sub-signal components to yield corresponding Equations 12, 13 and 14 (Eqs. 12, 13 and 14):

$$|U_1| = G_1[A_1 k_1 + A_2 k_2 + A_3 k_3] + N_1 \qquad \text{Eq. 12}$$

$$|U_2| = G_2[B_1 k_1 + B_2 k_2 + B_3 k_3] + N_2 \qquad \text{Eq. 13}$$

$$|U_3| = G_3[C_1 k_1 + C_2 k_2 + C_3 k_3] + N_3 \qquad \text{Eq. 14}$$

wherein G is a constant coefficient, and noise components $N_1$, $N_2$ and $N_3$ are substantially invariant as the tool **10** is moved up and down the well **230**.

On account of the energy associated with the signals $U_1$ to $U_3$ being readily computable from filtered signals output from the DSP **170**, and the ratios of $A_1$, $B_1$ and $C_1$ being known beforehand for any given type of leak or flow in the well **230**, as well as the noise components $N_1$, $N_2$ and $N_3$ and also the coefficients $G_1$, $G_2$ and $G_3$ being invariant, Equations 12, 13 and 14 (Eqs. 12, 13 and 14) are a group of relatively simple simultaneous equations which can be solved in real-time using modest computing resources at the computer **300**; for example, proprietary matrix inversion software is susceptible to being employed when operating the computer **300** for such a computation task. Optionally, especially when relatively few terms are included in the simultaneous equations, solving the aforesaid simultaneously equations is beneficially achieved using a pre-computed look-up table or array stored in data memory of the computer **300**. Yet alternatively, the computer **300** includes an digital array processor (DAP) configured to perform ultra-fast matrix inversion, thereby enabling the tool **10** to be moved at increased velocity up or down the well **230** in operation whilst simultaneously enabling highly reliable and spatially precise identification of faults and defects to be achieved. When

values of components $k_1$, $k_2$, $k_3$ have been computed, the sub-signals $R_1$, $R_2$ and $R_3$ can be generated, for example in graphical form on the display **310** so that the operator **320** is able to immediately identify which type of leak is present for a given position of the tool **10** along the well **230**.

For rapid and reliable detection of leaks and similar processes within the well **230,** it is found in practice better to employ relatively few frequency bands in the DSP **170** but to take many samples for solving the aforesaid simultaneous equations. Utilizing too many frequency bands and relative few signal samples is susceptible to resulting in computational convergence problems and unreliable detection of smaller faults. Conveniently, the frequency bands are included in a frequency range of 10 kHz to 1000 kHz, more preferably 20 kHz to 1000 kHz. Optionally, the frequency bands employed within the DSP **170** are dynamically modified during measurement using the tool **10** within the well **230**.

Although, in reference to Figures 3 and 4, a simple and effective implementation of the present invention is described using three filter bands in the DSP **170** with corresponding computations executed in the computer **300,** it will be appreciated that more than, or less than, three filter bands are susceptible to being employed in the DSP 170. Optionally, in a range of two to ten band-pass filters are employed in the DSP **170** giving rise to in a range of two to ten filtered signals $U$ for processing in the computer **300**. Optionally, the number of filtered signals $U$ employed is dynamically variable. On account of the mutual ratios of the coefficients A, B, C ... and so on defining which types of leaks or defects are present, an order of three to ten such coefficients enables the tool **10** together with its computer **300** to identify not only magnitudes and spatial positions of leaks and defects, but also accurately characterize their nature. By identifying a nature of the leaks or defects within the well **230,** several possibilities derive therefrom, for example:

(a) an identified leak or defect identified in the well **230** is of a stable nature and can be left untreated or unrepaired;
(b) an identified leak or defect identified in the well **230** is of a nature that a repair or component replacement must be executed; such repair can, for example, including extracting and replacing the pipe **140;**
(c) an identified leak or defect is of such a serious nature that the well **230** must be temporarily or permanently closed down;
(d) an identified leak or defect is of such a nature that operating conditions of the well **230** should be modified, for example a pressure developed in the well **230** increased or decreased as appropriate to reduce a pressure difference existing across the pipe **140.**

Before the tool **10** is capable of being deployed, a calibration method is beneficially invoked. In a first step of the method, a response of the tool 10 to various known leaks or defects in a test pipe is undertaken to determine the coefficients A, B, C and so forth for each type of leak or defect which the tool **10** is required to detect in operation, together with appropriate selection of band-pass filter frequencies for use when configuring the DSP **170.** In a second step of the method, a background noise characteristic of the tool **10** is then undertaken in a situation where the tool **10** is disposed remotely from any leaks or defects. In a third step of the method, the computer **300** and the DSP **170** are provided with parameters to configure their filter characteristics and equation coefficients for performing matrix manipulations for detecting different types of leaks, flows and/or defects.

Beneficially, the computer **300** provides a graphical user interface on the screen **310** including a spatial representation of the pipe **140** together with overlaid symbols or markers illustrating a type and/or magnitude of detected leaks or defects. Moreover, the user **310** is able to control positioning of the tool **10** within the well **230** in real time during investigation of the well **230** via controls coupled to the computer **300,** for example for allowing the tool **10** to collect more information a preferred locations along the well **230**.

Optionally, the tool **10** is supplemented with other types of apparatus, for example one or more of:

(a) inspection cameras and/or optical interrogation probes;
(b) gamma probes;
(c) oil/water/gas phase sensors;
(d) chemical sensors;
(e) pressure sensors;
(f) temperature sensors;
(g) ultrasonic flow sensors;
(h) mechanical flow sensors; and
(g) mechanical "feeler" probes.

These other types of apparatus, as defined in one or more of (a) to (g), are beneficially also mounted onto the **tool 10** and their output signals indicative of conditions with the well **230** are conveyed to the computer **300.** Moreover beneficially, simultaneous equations solved by the computer **300,** as elucidated in the foregoing, also include filtered and/or unfiltered signal components and coefficients pertaining to these other types of apparatus. For example, a certain category of leak is found only to occur when a region within the well **230** has a gas composition at a pressure over a defined pressure threshold.

Modifications to embodiments of the invention described in the foregoing are susceptible to being implemented without departing from the scope of the invention as defined by the appended claims.

**Claims**

1.  A method of quantifying, detecting and localizing one or more leaks or a flow of liquid or gasses in an oil or gas producing well (230), wherein said method employs a logging tool (10) forming part of a logging string (220) deployed in operation in a borehole of the well (230),
    said logging tool (10) comprises a sensor housing with a single broadband passive acoustic transducer (150), an amplifier (160), a processing unit (170) and a telemetry unit (180),
    wherein said method comprises the steps of:

    (a) detecting high frequency signals (210) in an ultrasonic frequency range using the single acoustic transducer (150), wherein the signals (210) are generated by acoustic noise from leaks (200) or flow of liquid or gasses in a region surrounding the acoustic transducer (150) in the borehole;
    (b) amplifying the signals (210) in the amplifier (160) to generate corresponding amplified signals for inputting into the processing unit (170) local to the acoustic transducer (150);
    (c) band-pass frequency filtering said amplified signals (210) for generating corresponding filtered data, wherein filtering of the amplified signals (210) over several frequency ranges is performed in real time during data logging by utilizing dynamic signal filtering for optimally improving signal-to-noise ratio by filtering away background noise in the amplified signals (210), thereby generating said corresponding filtered data; and
    (d) processing the filtered data in said processing unit (170) for transmitting the filtered data, using said telemetry unit (180), to a unit including a computer (300) in a surface region remote from the logging tool (10) for storage and/or viewing of said filtered data, which involves said computer (300) being adapted to perform simultaneous resolution of said filtered data to identify occurrence of said one or more leaks or a flow of liquid or gasses in the oil or gas producing well (230).

2.  A method as claimed in claim 1, including a step of computing a physical size of said one or more leaks from a pressure difference ($\Delta$P) existing in operation across a wall of a pipe (140) in which said one or more leaks have arisen and an amplitude of said one or more signals (210) provided by said acoustic transducer (150).

3.  A method as claimed in claim 1 or 2, wherein said filtered data is transmitted at a data rate of up to 1 kbit/second from said processing unit (170) along a wire connection of a string to said computer (300) in the surface region remote from the acoustic transducer (150).

4.  A method as claimed in claim 3, wherein said wire connection is in a range of 3 to 10 km long.

5.  A method as claimed in claim 1, wherein said acoustic transducer (150) is mounted inside a sensor housing adapted to be lowered in operation down into said well (230) or a pipe by utilizing a string (20).

6.  A method as claimed in claim 1, wherein data collection occurs concurrently with the acoustic transducer (150) being moved in a manner of a continuous motion up or down the well (230) or pipe with a log speed in a range of 0.1 to 50 meters per minute.

7.  A method as claimed in claim 1, wherein said method is adapted to characterize the well (230) implemented as an injection well for gas and water.

8.  A method as claimed in claim 1, wherein said method is adapted to detect and localize a secondary leak, said secondary leak being a leak and flow of gas, liquid, or particles, in a position further out from said well (230), namely in a distantly-positioned casing room.

9.  A method as claimed in claim 1, wherein said method is adapted to measure small flows of oil, water, or gas, or a combination of these in a casing room close to a position of the acoustic transducers (150).

10. A method as claimed in claim 1, wherein said method is adapted to implement fluid measurements whilst the well (230) or the pipe is operational or during shutdown.

**11.** A method as claimed in claim 1, wherein said method involves using a log string or a tool for the transducer (150) that is continuously in motion when in operation in the well (230), or a pipe with log speeds in a range of 0.1 to 50 meters per minute, for carrying out measurements whilst the well (230) or pipe is operational or during shutdown.

**Patentansprüche**

**1.** Verfahren zur Quantifizierung, Detektion und Lokalisierung eines oder mehrerer Lecks oder eines Stroms einer Flüssigkeit oder eines Gases in einer Öl oder Gas produzierenden Quelle (230), wobei das Verfahren eine Sondiervorrichtung (10), die Teil eines Sondierzuges (220) ist, der im Betrieb in einem Bohrungsloch der Quelle (230) angeordnet ist, verwendet,
wobei die Sondiervorrichtung (10) ein Sensorgehäuse mit einem einzelnen passiven Breitband-Akustikwandler (150), einem Verstärker (160), einer Prozessoreinheit (170) und einer Telemetrieeinheit (180) umfasst,
wobei das Verfahren die Schritte umfasst:

(a) Detektieren von Hochfrequenzsignalen (210) in einem Ultraschallfrequenzbereich unter Verwendung des einzelnen Akustikwandlers (150), wobei die Signale (210) erzeugt werden durch akustisches Rauschen von Lecks (200) oder eines Flusses von Flüssigkeit oder Gasen in einer Region, welche den Akustikwandler (150) in dem Bohrungsloch umgibt;
(b) Verstärken der Signale (210) in dem Verstärker (160) zur Erzeugung korrespondierender verstärkter Signale zur Eingabe in die zu dem Akustikwandler (150) lokale Prozessoreinheit (170);
(c) Bandpassfrequenzfilterung der verstärkten Signale (210) zur Erzeugen korrespondierender gefilterter Daten, wobei das Filtern des verstärkten Signals (210) über mehrere Frequenzbereiche durchgeführt wird in Echtzeit während der Datenaufzeichnung unter Verwendung einer dynamischen Signalfilterung zum optimalen Verbessern des Signal-zu-Rausch-Verhältnisses durch Wegfilterung von Hintergrundrauschen in den verstärkten Signalen (210), wobei dabei besagte korrespondierende gefilterte Daten generiert werden; und
(d) Verarbeitung der gefilterten Daten in der Prozessoreinheit (170) zum Übertragen der gefilterten Daten unter Verwendung besagter Telemetrieeinheit (180) zu einer Einheit umfassend einen Computer (300) in einer Oberflächenregion entfernt von der Sondiervorrichtung (10) zur Speicherung und/oder Betrachtung der besagten gefilterten Daten, was besagten Computer (300), der eingerichtet ist zur Ausführung simultaner Auflösung der genannten gefilterten Daten zur Identifizierung des Vorkommens von besagten einen oder mehreren Lecks oder eines Flusses von Flüssigkeit oder Gas in der Öl oder Gas produzierenden Quelle (230), involviert.

**2.** Verfahren nach Anspruch 1, umfassend einen Schritt der Berechnung einer physischen Größe des besagten einen oder mehreren Lecks aus einer Druckdifferenz ($\Delta$P), welche im Betrieb vorkommt über eine Wand eines Rohres (140), in dem besagtes eines oder mehrere Lecks entstanden sind und einer Amplitude der besagten einen oder mehreren durch besagten Akustikwandler (150) bereitgestellten Signale (210).

**3.** Verfahren nach Anspruch 1 oder 2, wobei besagte gefilterte Daten mit einer Datenrate von bis zu 1 kbit/Sekunde von besagter Prozessoreinheit (170) entlang einer Drahtverbindung zum besagten Computer (300) in der Oberflächenregion entfernt von dem Akustikwandler (150) übertragen werden.

**4.** Verfahren nach Anspruch 3, wobei besagte Drahtverbindung im Bereich von 3 bis 10 km lang ist.

**5.** Verfahren nach Anspruch 1, wobei besagter Akustikwandler (150) innerhalb eines Sensorgehäuses angeordnet ist, welches eingerichtet ist im Betrieb herabgelassen zu werden hinunter in besagte Quelle (230) oder ein Rohr unter Nutzung eines Strangs (20).

**6.** Verfahren nach Anspruch 1, wobei die Datensammlung auftritt während gleichzeitig der Akustikwandler (150) in der Art einer kontinuierlichen Bewegung auf oder ab in der Quelle (230) oder dem Rohr mit einer Geschwindigkeit im Bereich von 0,1 bis 50 m/min bewegt wird.

**7.** Verfahren nach Anspruch 1, wobei besagtes Verfahren geeignet ist die als Injektionsbohrloch für Gas und Wasser eingerichtete Quelle (230) zu charakterisieren.

**8.** Verfahren nach Anspruch 1, wobei besagtes Verfahren eingerichtet ist um ein zweites Leck zu detektieren und zu lokalisieren, wobei das zweite Leck ein Leck und Fluss von Gas, Flüssigkeit oder Partikeln ist in einer Position weiter außerhalb besagter Quell (230), nämlich in einem entfernt positionierten Gehäuseraum.

9. Verfahren nach Anspruch 1, wobei das besagte Verfahren eingerichtet ist einen geringen Fluss von Öl, Wasser oder Gas oder einer Kombination von diesen in einem Gehäuseraum nahe zu einer Position von dem Akustikwandler (150) zu messen.

10. Verfahren nach Anspruch 1, wobei besagtes Verfahren eingerichtet ist Fluidmessungen gegenüber der Quelle (230) oder dem Rohr während deren Betrieb oder bei deren Abschaltung zu messen.

11. Verfahren nach Anspruch 1, wobei besagtes Verfahren die Verwendung eines langen Seils oder eines Instruments für den Wandler (150) umfasst, der kontinuierlich in Bewegung ist, wenn dieser in Betrieb in der Quelle (230) oder einem Rohr mit einer Geschwindigkeit im Bereich von 0,1 bis 50 m/min ist, um Messungen gegenüber der Quelle (230) oder dem Rohr in deren Betrieb oder deren Abschaltung durchzuführen.

**Revendications**

1. Procédé de quantification, de détection et de localisation d'une ou plusieurs fuites ou d'un écoulement de liquide ou de gaz dans un puits de production de pétrole ou de gaz (230), dans lequel ledit procédé emploie un outil de diagraphie (10) faisant partie d'une rame de diagraphie (220) déployée, en utilisation, dans un forage du puits (230), ledit outil de diagraphie (10) comprend un logement de capteur avec un transducteur acoustique passif de bande large unique (150), un amplificateur (160), une unité de traitement (170) et une unité de télémétrie (180), dans lequel ledit procédé comprend les étapes de :

    (a) la détection de signaux de haute fréquence (210) dans une plage de fréquences ultrasoniques en utilisant le transducteur acoustique unique (150), dans lequel les signaux (210) sont générés par un bruit acoustique émanant de fuites (200) ou d'un écoulement de liquide ou de gaz dans une région entourant le transducteur acoustique (150) dans le forage ;
    (b) l'amplification des signaux (210) dans l'amplificateur (160) pour générer des signaux amplifiés correspondants destinés à être entrés dans l'unité de traitement (170) locale au transducteur acoustique (150) ;
    (c) le filtrage de fréquences passe-bande desdits signaux amplifiés (210) pour générer des données filtrées correspondantes,
    dans lequel le filtrage des signaux amplifiés (210) sur plusieurs plages de fréquences est effectué en temps réel au cours de la diagraphie de données en utilisant un filtrage de signal dynamique pour une amélioration optimale du rapport de signal sur bruit par le filtrage du bruit de fond dans les signaux amplifiés (210), en générant de ce fait lesdites données filtrées correspondantes ; et
    (d) le traitement des données filtrées dans ladite unité de traitement (170) pour transmettre les données filtrées, en utilisant ladite unité de télémétrie (180), à une unité comprenant un ordinateur (300) dans une région de surface distante de l'outil de diagraphie (10) pour la mémorisation et/ou la visualisation desdites données filtrées, ce qui implique que ledit ordinateur (300) est apte à effectuer une résolution simultanée desdites données filtrées pour identifier une survenance desdites une ou plusieurs fuites ou d'un écoulement de liquide ou de gaz dans le puits de production de pétrole ou de gaz (230).

2. Procédé selon la revendication 1, comprenant une étape de calcul d'une taille physique desdites une ou plusieurs fuites à partir d'une différence de pression (ΔP) existante, en utilisation, à travers une paroi d'un tuyau (140) dans lequel lesdites une ou plusieurs fuites sont survenues et d'une amplitude desdits un ou plusieurs signaux (210) fournis par ledit transducteur acoustique (150).

3. Procédé selon la revendication 1 ou 2, dans lequel lesdites données filtrées sont transmises à un débit de données jusqu'à 1 kb/s à partir de ladite unité de traitement (170) le long d'une liaison filaire d'une rame au dit ordinateur (300) dans la région de surface distante du transducteur acoustique (150).

4. Procédé selon la revendication 3, dans lequel ladite liaison filaire a une longueur dans une plage de 3 à 10 km.

5. Procédé selon la revendication 1, dans lequel ledit transducteur acoustique (150) est monté à l'intérieur d'un logement de capteur apte à être descendu, en utilisation, dans ledit puits (230) ou dans un tuyau en utilisant une rame (20).

6. Procédé selon la revendication 1, dans lequel une collecte de données se déroule simultanément pendant le déplacement continu du transducteur acoustique (150) vers le haut ou vers le bas du puits (230) ou du tuyau avec une vitesse de diagraphie dans une plage de 0,1 à 50 m/mn.

7. Procédé selon la revendication 1, dans lequel ledit procédé est apte à caractériser le puits (230) mis en oeuvre sous la forme d'un puits d'injection de gaz et d'eau.

8. Procédé selon la revendication 1, dans lequel ledit procédé est apte à détecter et à localiser une fuite secondaire, ladite fuite secondaire étant une fuite et un écoulement de gaz, de liquide ou de particules à une position plus éloignée dudit puits (230), en l'occurrence dans un local de tubage positionné à distance.

9. Procédé selon la revendication 1, dans lequel ledit procédé est apte à mesurer de petits écoulements de pétrole, d'eau ou de gaz ou d'une combinaison de ceux-ci dans un local de tubage proche d'une position des transducteurs acoustiques (150).

10. Procédé selon la revendication 1, dans lequel ledit procédé est apte à prendre des mesures de fluide pendant que le puits (230) ou le tuyau est opérationnel ou pendant un arrêt.

11. Procédé selon la revendication 1, dans lequel ledit procédé implique l'utilisation d'une rame de diagraphie ou d'un outil pour le transducteur (150) qui est en déplacement continu lors d'une utilisation dans le puits (230) ou un tuyau, avec des vitesses de diagraphie dans une plage de 0,1 à 50 m/mn, pour prendre des mesures pendant que le puits (230) ou le tuyau est opérationnel ou pendant un arrêt.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2367362 A
- WO 9850771 A
- US 2002124633 A
- CA 1141019
- JP 4081633 B
- WO 2004104570 A